(19)

Europäisches
Patentamt
European
Patent Office
Office européen
des brevets

(11) **EP 1 990 973 B1**

(12) **EUROPEAN PATENT SPECIFICATION**

(45) Date of publication and mention
of the grant of the patent:
**12.08.2015 Bulletin 2015/33**

(51) Int Cl.:
**H04L 29/06** *(2006.01)*    **H04L 29/08** *(2006.01)*

(21) Application number: **08002999.4**

(22) Date of filing: **19.02.2008**

(54) **Deployment of distributed network intrusion detection systems in social networks**

Einsatz verteilter Systeme zur Erkennung von Eindringungen in soziale Netzwerke

Déploiement de systèmes d'intrusion de réseau distribué dans des réseaux sociaux

(84) Designated Contracting States:
**DE FR GB**

(30) Priority: **19.02.2007  IL 18142807**

(43) Date of publication of application:
**12.11.2008  Bulletin 2008/46**

(73) Proprietor: **Deutsche Telekom AG**
**53113 Bonn (DE)**

(72) Inventors:
• **Tubi, Meital**
**Hadera 38410 (IL)**
• **Puzis, Rami**
**Ashdod 77477 (IL)**
• **Elovici, Yuval**
**Arugot 79864 (IL)**

(74) Representative: **Maiwald Patentanwalts GmbH**
**Elisenhof**
**Elisenstrasse 3**
**80335 München (DE)**

(56) References cited:
**US-A1- 2005 060 562    US-A1- 2006 218 225**

• **V. Yegneswaran ET AL: "Global Intrusion Detection in the DOMINO Overlay System", In Proceedings of Network and Distributed System Security Symposium (NDSS}, 1 January 2004 (2004-01-01), XP55035089, Retrieved from the Internet: URL:http://citeseerx.ist.psu.edu/ viewdoc/d ownload; jsessionid=EFCE8D9A1F6CA2D97664CC7 5B9355F28?doi=10.1.1.118.6576&rep=rep1&typ e=pdf [retrieved on 2012-08-09]**
• **TUBI M ET AL: "Deployment of DNIDS in Social Networks", INTELLIGENCE AND SECURITY INFORMATICS, 2007 IEEE, IEEE, PI, 1 May 2007 (2007-05-01), pages 59-65, XP031182810, DOI: 10.1109/ISI.2007.379534 ISBN: 978-1-4244-1329-4**
• **RAMI PUZIS ET AL: "Fast algorithm for successive computation of group betweenness centrality", PHYSICAL REVIEW E, vol. 76, no. 5, 1 November 2007 (2007-11-01), XP55034892, ISSN: 1539-3755, DOI: 10.1103/PhysRevE. 76.056709**
• **TIAN H ET AL: "Constructing efficient peer-to-peer overlay topologies by adaptive connection establishment", COMPUTER COMMUNICATIONS, ELSEVIER SCIENCE PUBLISHERS BV, AMSTERDAM, NL, vol. 29, no. 17, 8 November 2006 (2006-11-08), pages 3567-3579, XP025090078, ISSN: 0140-3664, DOI: 10.1016/J.COMCOM.2006.05.016 [retrieved on 2006-11-08]**

**Description**

**Field of the Invention**

The present invention relates to the field of data network security. Specifically, this invention relates to a method for optimal deployment of distributed network intrusion detection systems throughout a social network.

**Background of the Invention**

During recent years, the number of attacks on computer networks has increased dramatically, as has the dependence of companies and government agencies on their computer networks. Consequently, many efforts are made in order to provide computer and data protection in multi-connectivity networks.

As is well known, computer users communicate with one another and exchange various types of information over the internet, thereby creating a social network. However, exchanging information over such social networks (e.g., via emails, instant messaging etc.,) can be hazardous even when, initially, only one of the user's is infected by malware. The infected user can, unintentionally, infect numerous other users through his connection over the social network, thus allowing the malware to spread through the network.

There are various methods in which malwares are contained, including intrusion prevention systems that filter Internet traffic relying on predefined attack signatures or source address blacklists [for example, in X. Zhang, C. Li, W. Zheng, "Intrusion prevention system design", Proceedings - The Fourth International Conference on Computer and Information Technology, pp. 386-390, 2004]. Both approaches are commonly implemented in software and hardware security solutions. Signatures of existing threats can be obtained by a careful study in antivirus laboratories. To automate the process of detecting new threats, Intrusion Detection Systems produce blacklists and signatures of potential attacks using honey-pots [for example, in Y. Tang, S. Chen, "Defending Against Internet Worms. A signature based approach", IEEE INFOCOM, 2005] or anomaly detection techniques [for example, in A. Gupta, R. Sekar, "An Approach for Detecting Self-Propagating Email Using Anomaly Detection", In Proceedings of the International Symposium on Recent Advances in Intrusion Detection, September 2003].

Weaver et al. in "A taxonomy of computer worms", In The First ACM Workshop on Rapid Malcode (WORM), 2003, state that an effective Intrusion Detection System should be widely distributed across the network. There are several existing types of detection systems that use a coordinated effort of many detection units, for example, V. Yegneswaran, P. Barford, S. Jha, "Global Intrusion Detection in the DOMINO Overlay System", In Proceedings of NDSS, San Diego, CA, 2004. However, the number of detection units cannot be infinite. It is not practical to inspect the traffic generated by all Internet users. Therefore, various methods use a predefined number of detection units that are dispersed over the network. For example, P. Blackburn proposes in "Quarantining DHCP clients to reduce worm infection risk", (http://www.giac.org/certified_professionals/practicals/gsec/3472.php) that only the traffic of users that have recently obtained an IP address should be inspected and cleaned. In addition, theoretic models of epidemic propagation suggest immunizing the most significant users in order to slow down the threat propagation in the entire network [for example, in R. Pastor-Satorras, A. Vespignani, "Epidemics and immunization in scale-free networks", http://arxiv.org/abs/cond-mat/0205260, 2002]. However, none of the methods known today are optimal in their distribution of the detection units, thus many malware instances are missed, causing the infection of numerous computers world wide.

It would therefore be highly desirable to develop a method by which a given number of detection units could be optimally distributed throughout the network, thereby enabling the containments of a maximal number of malware instances. A method which relates to a social network, should be able to provide such an optimal distribution method.

It is therefore an object of the present invention to provide a method by which a given number of detectors (and/or units that clean the information traffic) are optimally deployed over a social network, thereby increasing the effectiveness of malware detection.

Additional purposes and advantages of this invention will become apparent as the description proceeds.

**Summary of the Invention**

The present invention is directed to a method for deploying malware detection systems over a social network of computers, according to which the social network is constructed according to the communication patterns between the different users on the computer network and the hierarchy of the significance of the users is identified, according to their influence on the communications within the social network. The propagation of malwares through the social network is analyzed and the detection systems are deployed throughout the social network according to the results of the analysis.

The social network may be constructed according to email transactions, instant messaging, chat rooms or any combination thereof. The social network deploying represented by a graph that is un-weighted and undirected, weighted and undirected, un-weighted and directed or weighted and directed. The direction refers to the direction of the transmissions between the users in the social network and the weight refers to the volume of the transmissions, the number of the transmissions or to both.

The hierarchy of the significance of the users in the social network may be calculated according to the degree centrality, closeness centrality, betweenness centrality and group betweenness centrality. The hierarchy of the significance of the users in the social network may be calculated according to group betweenness centrality. The group betweenness centrality may be calculated by conducting a preprocessing step, wherein four matrices, the first comprising the distances between every two vertices in the network, the second comprising elements of $\sigma_{s,t}$ for every pair of [s,t] vertices in the network, the third comprising elements of $\delta_{s,\bullet}(v) = \sum_{t \in V} \delta_{s,t}(v) \cdot CW(s,t)$ for every pair of [s,t] vertices in the network and the fourth comprising the path betweenness between every two vertices in the network, are constructed. Then the relevant portions of the four matrices that correspond to the vertices in each group are choosen, thereby creating reduced matrices, wherein the reduced matrices for groups comprising k vertices are of k x k size. Calculations with regard to one vertex in the group are performed using the reduced matrices, for obtaining the contributions of all other vertices to the betweenness centrality of the group. The reduced matrices are updated according to the result of these calculations, which are repeated while updating the reduced matrices for each additional vertex, wherein paths that pass through any of the previously computed vertices are not considered. Once all vertices have been added into the calculations, the results of all consecutive calculations are summed, wherein the sum represents the betweenness centrality of the group.

Updating of the σ matrix for the number of paths passing between vertices x and y may be performed according the equation $\sigma_{x,y}^{M \cup \{v\}} = \sigma_{x,y}^{M} \cdot (1 - \delta_{x,y}^{M}(v))$, wherein $\sigma_{x,y}^{M \cup \{v\}}$ is the new, updated, matrix after vertex v was added to the group, and wherein $\sigma_{x,y}^{M}$ is the old matrix before the update and $\delta_{x,y}^{M}(v)$ is calculated according to the equation

$$\delta_{x,y}^{M}(v) = \begin{cases} \sigma_{x,v}^{M} \cdot \sigma_{v,y}^{M} & dist[x,y] = dist[x,v] + dist[v,y] \\ 0 & otherwise \end{cases}.$$

The path betweenness matrix, referring to vertices x and y, is updated while considering the identity of vertex v such that:

if vertex v=y=x then $PB_{x,y}^{M \cup v} = PB_{x,y}^{M} - PB_{x,y}^{M} \cdot \delta_{x,y}^{M}(v)$, otherwise,

if x≠v=y then $PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x)$, otherwise,

if y≠v=x then $PB_{x,y}^{M \cup v} = PB_{x,y}^{M} - PB_{x,y}^{M} \cdot \delta_{x,y}^{M}(v) - PB_{x,v}^{M} \cdot \delta_{x,v}^{M}(y)$, and otherwise,

if x≠v≠y then $PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x) - PB_{x,v}^{M} \cdot \delta_{x,v}^{M}(y)$, wherein the matrices denoted by *M u* v are the new updated matrices, while the old matrices are denoted by M.

The analysis of the propagation of malwares through the social network may be performed using an epidemic propagation model, such as the SIRS model. The analysis of the propagation of malwares through the social network may be performed assuming that there are detection systems distributed throughout the social network according to the centrality of the various users on the social network. The detection system can both detect and contain malwares propagating over the social network.

**Brief Description of Drawings**

- Fig. 1 schematically shows an example of an arbitrary graph;
- Fig. 2 schematically describes the calculation of GBC according to the present invention in relation to the group described therein;

- Fig. 3 schematically describes the SIRS model;
- Figs. 4A to 4D are screen shots of an example simulation;
- Fig. 5 is a graph showing the % of infected/crashed computers with varying numbers of DNIDS deployed;
- Fig. 6 is a graph showing the percentage of intercepting threats using greedy GBC deployment, random deployment, and TopBC deployment;
- Fig. 7 is a graph illustrating the detection rate using Greedy GBC deployment random deployment, and TopBC deployment;
- Fig. 8 is a graph illustrating the number of existing threats for Greedy GBC deployment random deployment, and TopBC deployment; and
- Fig. 9 is a graph showing the detection time of a new threat class for greedy GBC and random deployment, at two different detection probabilities.

**Detailed Description of Preferred Embodiments**

In light of the drawbacks of the prior art, as described hereinabove, there is a need for an improved method by which detection systems may be optimally deployed over selected links/nodes of social networks.

As a matter of convenience only detection systems are referred to hereinbelow, however, it should be understood that systems which clean the traffic stream from malware instances, or systems that both detect malwares and clean the traffic stream can be used as well.

The method proposed by present invention can be described by relating to the following four main stages. First, the social network is built by analyzing the communication between users. Then, in the second stage, the hierarchy of the significance of the users, according to their influence on the communications within the social network is identified. In the third stage malware propagation through the social network is analyzed. Finally, in the fourth stage, the detection systems are distributed according to the significance of the users in the social network.

In the first stage, the graph representing the social network is constructed. Since the social network is related to the communications between the different users on the network, those communications must be monitored in order to construct the social network. As would be understood by those familiar with the art, any type of communications can be monitored, including email transactions, instant messaging, chat room interactions etc. Furthermore, several types of communications can be jointly implemented in order to construct the graph representing the social network. Hereinbelow, we shall refer to the monitoring of email transactions for convenience only, without any limitation of the type of communication traffic that can be monitored in order to construct the social network according to the present invention.

Any network comprising email transactions contains logs of email servers. Those logs contain the addresses of senders and recipients of all outgoing and incoming emails. In the graph representing the social network each node represents a user, i.e., a specific email address, and each edge represents a social connection between two users, i.e., an email sent from one user to the other. The derived graph may be weighted or un-weighted and directed or undirected. In this context, a directed graph is one in which user A may transmit information to user B, but user B does not transmit any information to user A. This direction of transmission is represented in the graph. A weighted graph takes the number and/or the volume of transmissions between each two users into account, and/or any other appropriate weight.

Once the graph representing the social network is constructed, the hierarchy of the centrality of the users, i.e., vertices, must be identified. Any suitable method for identifying the central vertices in the graph may be used according to the present invention. Examples of centrality methods which could be used according to the present invention are degree centrality, closeness centrality and betweenness centrality, and Group Betweenness Centrality (GBC), all referred to in further detail hereinbelow.

As would be understood by those familiar with the art, all of the above methods for measuring the centrality of vertices in a graph essentially provide an ordered list of all vertices, and groups containing varying numbers of vertices, according to their centrality in the graph.

The following terms are defined for clarity:

Centrality: centrality measures the importance and influence of nodes within a graph, wherein the topology of any data network can be considered as a type of graph. There are several different aspects of centrality. The first aspect is referred to in the art as the degree centrality. The degree of a node is calculated by the number of neighboring nodes of that node. The second type of centrality is closeness centrality (see, for example, G. Sabidussi, The centrality Index of a Graph, Psychometrika, 31:581-603, 1966). The closeness is measured by the average distance of a certain node from all other nodes. The third type of centrality, betweenness centrality (BC) is defined as the relative amount of shortest paths from every source to every destination in the graph that pass through the node being measured, wherein the sources and targets are all other nodes in the graph. On betweenness centrality see, e.g., L. C. Freeman, Sociometry, 40:35-41, 1977 and J. M. Anthonisse, The Rush in a Directed Graph, Technical Report BN 9/71, Stichting Mathematisch Centrum, Amsterdam, 1971. Finally, a reference to graph centrality may be found in P. Hage and F. Harary, Social Networks, 17:57-63, 1995.

$\sigma_{s,t}$ is defined as the number of shortest paths from vertex s to vertex t. $\sigma_{s,t}(v)$ is the number of shortest paths from vertex s to vertex t passing through vertex v. Given a graph G=(V,E), the fraction of shortest paths from t to s that pass through v, i.e., $\delta_{s,t}(v) = \dfrac{\sigma_{s,t}(v)}{\sigma_{s,t}}$ , describes the influence of vertex v on the communication between s and t.

The influence of vertex v on all communications originating at vertex s is $\delta_{s,\bullet}(v) = \sum_{t \in V} \delta_{s,t}(v)$. The BC is defined as

$$C_B(v) = \sum_{s \neq v \neq t \in V} (\delta_{s,t}(v)) = \sum_{s \neq v \in V} (\delta_{s,\bullet}(v))$$

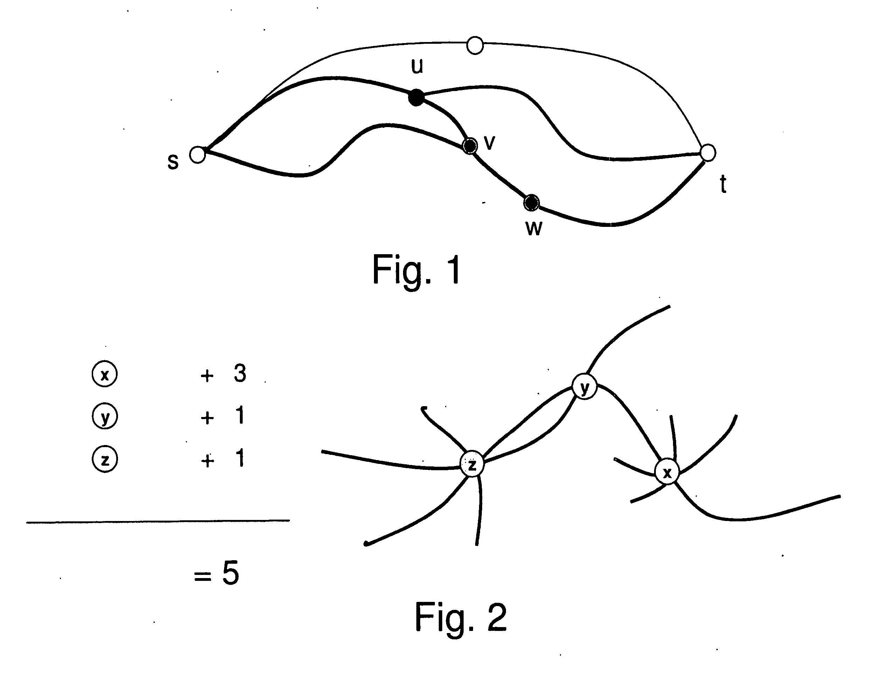

An Example of an arbitrary graph is shown in Fig. 1. In this graph there are four shortest paths connecting vertex s to vertex t, i.e., $\sigma_{s,t}$ = 4. Two of those paths pass through vertex v, thus, $\sigma_{s,t}(v)$ = 2. Therefore, the overall influence of vertex v on the communication between vertices s and t is $\delta_{s,t}(v)$=2/4.

Although the above definitions relate to single vertices within the graph, similar definitions apply to groups of vertices, as well. The degree of a group is measured by the number of non-group vertices connected to the group members. The closeness of a group is defined as the sum of minimal distances from the group to all vertices outside the group. Finally, the betweenness of a group is traditionally defined as the relative amount of shortest paths from every source to every target in the graph that passes through at least one member of the group.

Similar to the definitions presented hereinabove, $\ddot{\sigma}_{s,t}(C)$ is defined as the number of shortest paths from vertex s for vertex t passing through at least one member of group C. $\ddot{\delta}_{s,t}(C) = \ddot{\sigma}_{s,t}(C) \big/ \sigma_{s,t}$ is the influence of group C on communications between vertices s and t. The group betweenness centrality is defined as $C_B(C) = \sum_{s,t \in V} \ddot{\delta}_{s,t}(C)$.

Referring again to the example of Fig. 1, and defining group C as consisting of vertices u, v, and w, it appears that there are three shortest paths from vertex s to vertex t passing through at least one member of group C, i.e., $\ddot{\sigma}_{s,t}$(C) = 3. In this example, the influence of group C on the communications between vertices s and t is calculated as

$$\ddot{\delta}_{s,t}(C) = \ddot{\sigma}_{s,t}(C) \big/ \sigma_{s,t} = 3/4.$$

Another definition important to the present invention is that of path betweenness (PB). PB(C) measures the relative amount of shortest paths from every source to every destination in the graph that pass through each and every member of group C.

In the improved embodiment of the present invention efficient calculations of Group Betweeness Centrality (GBC) are utilized in order to identify the most central group of vertices in the social graph. However, finding the group of vertices with maximal GBC is NP hard when using standard GBC calculations.

M. G. Everett and S. P. Borgatti, in "The centrality of Groups and Classes", Mathematical Sociology, 23(3):181-201, 1999, show how the definitions of betweenness centrality, as described hereinabove, can be extended so as to be applied to groups. One of the methods known today for calculating BC was developed by Ulrik Brandess (see Ulrik Brandes, Mathematical Sociology, 25(2):163-177, 2001). Brandes's method calculates the betweenness of all vertices in a graph in O(|V|| E |), wherein |E| is the number of links, and |V| is the number of vertices. That method can be extended to calculate the GBC of a single group. Thus, for each group the calculation will be of O(|V||E|) length. Other existing methods require $O(|V|^3)$ time in order to perform the same task.

Although the present invention could implement any known method for calculating the GBC, the above approaches require long calculations which are not feasible in graphs with a large number of vertices. Therefore, the present invention preferably implements path betweenness (PB), among other measures, for the calculation of group betweenness centrality (GBC).

When searching for a group of k vertices with maximal GBC in a graph defined as G=(V,E), even in medium sized graphs (~1000 vertices) and small groups (~10 vertices), the existing solutions known in the art are not feasible. In this preferable embodiment of the present invention, a preprocessing step, that requires a calculation length of $O(|V^3|)$ is performed. Once this preprocessing step is conducted, the method proposed by the present invention allows the computation of the GBC of every set of vertices of size k in $O(k^3)$ time, instead of, for example, O(|V||E|) time , using the Ulrik method. The run-time of the method of the present invention therefore does not depend on the size of the graph, thus such calculations can be feasibly performed for large graphs, as well.

The preprocessing step referred to above includes the construction of the following four matrices:

1. a matrix comprising the distances between all [s,t] vertices in the graph;
2. a matrix with elements of $\sigma_{s,t}$ for every pair of [s,t] vertices in the graph;

3. a matrix comprising elements of $\delta_{s,\bullet}(v) = \sum_{t \in V} \delta_{s,t}(v)$ for every pair of [s,t] vertices in the graph; and

4. a matrix comprising the path betweenness for two matrices s and t in the graph, for every pair of such matrices.

These four matrices are constructed according to a modified version of the Ulrik algorithm (see Ulrik Brandes, Mathematical Sociology, 25(2):163-177, 2001). The modifications of the original Ulrik algorithm include: ,

a) In the Original Ulrik algorithm the Betweenness in defined so that communications that start or end at vertex v are not included in Betweenness of v. in the method of the present invention, such communications are included in the calculation of the betweenness of vertex v.
b) Certain computed data, i.e., the distance, sigma and delta matrices, is discarded by the original Ulrik algorithm wherein the present invention that data is stored for future use.
c) The path betweenness matrix, which is not referred to in the Ulrik algorithm, is computed from the delta matrix.

Once the four matrices referred hereinabove are constructed, groups of vertices are defined, and the betweenness centrality of each group of $k \in V$ vertices is computed as follows:

When calculating the betweenness centrality of group C, consisting of k vertices, there is no need to perform calculations relating to the complete four matrices referred to above. Generally, the present invention describes a process by which the amount of GBC contributed by each vertex added to the group is calculated. The overall GBC of the group is the sum of the contributions of each vertex.

In the improved embodiment of the present invention, the relevant portions of the matrices are chosen for each group C wherein the relevant portion of each of the four matrices will be of size k x k. This reduction in the size of the matrices significantly reduces the computation time necessary for the calculations required according to the improved embodiment of the present invention.
If S is defined as the set of vertices that will eventually join the group and M is the subset of S composed of vertices that have already joined the group, the reduced matrices are defined as:

1. d(u,v) - Distance between u and v (same as before)

2. $\sigma_{u,v}$ - Number of shortest paths between u and v that are not covered by any vertex in M

3. $\delta_{u,o}(v)$ - The additional influence on communications originating at u that v can contribute to M

4. PB(u,v) - The Path Betweenness of pair (u,v) disregarding the shortest paths that pass through M

Once the matrices are reduces in size, the vertices of group C are added one by one into the calculation. The number of paths passing through each vertex v is represented by the cell [v,v] in the path betweenness matrix. With the addition of each vertex, a calculation relating to the reduced matrices is performed, using the number of paths passing through the added vertex, thereby calculating the contribution of all other vertices to the number of paths passing through group C. The reduced matrices are then updated accordingly. When calculating the number of paths passing thorough the vertices of group C, the paths which have already been considered in relation to previously added vertices in the group, are not considered a second time, thus at the end of the calculation the absolute number of paths passing through at least one of the vertices of the group is known. This is in essence the betweenness centrality of group C.
Fig. 2 is an example of such a calculation on a group comprising three vertices, X, Y, and Z. At first, only vertex X is added into the calculation. As shown in Fig. 2, three paths pass through vertex X, which is the result reached by the calculation of the present invention. Once the calculation with regard to vertex X is completed, the four reduced matrices are updated according to the result (in this case the result being 3), and vertex Y is added to the calculation. Although there are two paths passing through vertex Y only one of them is considered at this stage of the calculation since the other passes also through vertex X and therefore has already been taken into account in the calculation. The result of the calculation once vertex Y has been added will therefore be 1. The four reduced matrices are updated accordingly, and vertex Z is added into the calculation. As shown if Fig. 2, out of the three paths passing through vertex Z only one does not pass through vertices X and/or Y, thus the result of the calculation at this stage is 1. The overall result of the calculation is the sum of the results computed with the addition of each vertex, so that in the example depicted in Fig. 2, the overall result of the calculation, i.e., the betweenness centrality of group C consisting of vertices X, Y, and Z, is 3+1+1=5.

The updating of the important matrices, i.e. σ and PB(x,y), is performed as follows:

The number of shortest paths between x and y after the update is

$$\sigma_{x,y}^{M \cup \{v\}} = \sigma_{x,y}^{M} \cdot (1 - \delta_{x,y}^{M}(v)),$$ wherein $\sigma_{x,y}^{M \cup \{v\}}$ is the new, updated, matrix, i.e., after vertex v was added to the

group; $\sigma_{x,y}^{M}$ is the old matrix before the update (group M does not include vertex v yet); and $\delta_{x,y}^{M}(v)$ is calculated

according to the equation

$$\delta_{x,y}^{M}(v) = \begin{cases} \sigma_{x,v}^{M} \cdot \sigma_{v,y}^{M} & dist[x, y] = dist[x, v] + dist[v, y] \\ 0 & otherwise \end{cases}$$

When updating the path betweenness, the identity of vertex v is taken into account. If vertex v=y=x then

$$PB_{x,y}^{M \cup v} = PB_{x,y}^{M} - PB_{x,y}^{M} \cdot \delta_{x,y}^{M}(v).$$ . If x≠v=y then $$PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x),$$ and

if y≠v=x then $$PB_{x,y}^{M \cup v} = PB_{x,y}^{M} - PB_{x,y}^{M} \cdot \delta_{x,y}^{M}(v) - PB_{x,v}^{M} \cdot \delta_{x,v}^{M}(y).$$ When x≠v≠y then

$$PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x) - PB_{x,v}^{M} \cdot \delta_{x,v}^{M}(y).$$ All matrices denoted by M ∪v are the new updated matrices, while the "old" matrices are denoted by M.

Once the above-described calculation is performed for all groups Ci of vertices and the betweenness centrality of each group is known, and, therefore, the ordering of the betweenness centrality of all groups, comprising varying numbers of vertices, is known as well. As mentioned hereinabove, calculations other than GBC, e.g., degree centrality and closeness centrality, can be implemented as well in order to find the centrality of the groups of vertices in a graph.

Although the second stage of the instant invention essentially provides a list of groups of vertices, ordered according to their centrality, the number of vertices in the groups is not constant. Therefore, in order to provide an optimal deployment of detectors throughout the network, the propagation of malwares through the network must be analyzed. As a result of such an analysis, which is considered to be the third stage of the present invention, the number of detectors, as well as the vertices on which they should be placed, is known.

The above analysis is performed assuming that there are intrusion detection systems distributed throughout the network. The distribution of the detection systems is according to the hierarchy of the users found in stage two of the present invention.

As mentioned hereinabove, epidemiological models can be used to describe propagation of malwares in networks. Thus, in the context of the present invention such models can be used to analyze malware propagation through the social network constructed in stage one. Common models of epidemic propagation categorize the population into three defined states: susceptible (S); infective (I); and removed (R). S are individuals who do not have the disease in question but can catch it if exposed to someone who does; (I) individuals have the disease and can infect others they come in contact with; and (R) individuals have been disabled by the disease and can neither be infected by, nor infect, others.

Different epidemic propagation models define different transitions between the (S), (I), and (R) states. The SIR model assumes that any susceptible individual has a probability ☐ of catching the disease in a unit of time from any infective entity. Infected entities are removed with a probability ☐ in a unit of time [see, for example, R. Huerta, L.S. Tsimring, "Contact tracing and epidemics control in social networks", Physical Review E, vol. 66, 056115, 2002]. The SIS model is a model of endemic diseases: carriers that are cured become susceptible. Since carriers can be infected many times, it is possible that the disease will persist indefinitely, circulating around the population and will never die out [see, for example, M. E. J. Newman, "The structure and function of complex networks", SIAM Review, vol. 45, no. 2, pp. 167-256, 2003]. The SIRS model is an epidemiological model in which R individuals are only temporarily removed, i.e., they can be cured, returning to the S state.

Computer threats are similar to biological viruses in their spreading model. Email worms, for instance, can send themselves to randomly generated email addresses. To increase the amount of successful infections, some threats (such as ILoveYou, Kletz, etc.) exploit address-books or emails kept on the hosting computer. A threat can search for stored emails in order to retrieve addresses of potential victims.

As would be understood by those familiar with the art, any appropriate epidemic model can be used in the present invention in order to analyze the propagation of malware in the social network.

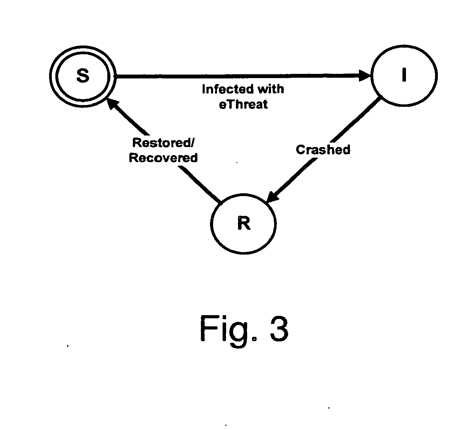

In the improved embodiment of the present invention the analysis of the propagation of malwares through the social network is performed using the SIRS model, described hereinabove. Using this model, a computer can be in one of the following states: a) Susceptible - a computer can become infected with a threat; b) Infective - a computer is infected with a threat and can infect others; c) Removed - a computer crashed and is now temporally disabled. A Removed computer can be recovered/restored to the Susceptible state. A schematic view of this model is presented in Fig. 3.

A Susceptible computer can be infected with a threat when a removable media is attached. Any susceptible individual, i.e., computer, has a constant probability of becoming infected in every time unit.

Within the social network, malwares can be transferred from one user to any one of his neighbors. For example, a Word document file infected with VBScript virus can be sent as a legitimate attachment.

Each infected computer has a constant probability of infecting one random neighbor in each time unit. Furthermore, each infected computer has a constant probability of crashing (and becoming removed) in each time unit. A crashed computer cannot be infected and cannot infect others. However, a crashed computer can recover to become susceptible again after a random number of time units in a range that is specified as a part of the initial parameters.

According to the improved embodiment of the present invention, the above SIRS model is used to analyze the propagation of threats/malware through the social network, taking into account the centrality of the various groups of vertices found in stage two. The results of this analysis point at the optimal number of detection systems which should be deployed on the social network, including the vertices on which they should be deployed.

In the fourth and final stage of the present invention, the detection systems are deployed on the social network according to the analysis described hereinabove. This deployment allows an optimal detection of malwares on the network, as well as an optimal containment thereof.

The invention will be further illustrated with reference to the following illustrative example, which is not intended to limit the scope of the invention in any manner.

## **Example**

In this example, the social network was extracted from logs of Email servers at Ben-Gurion University. Logs of Email contain addresses of a sender and a recipient of all outgoing and incoming Emails. The social network was created based on Email addresses appearing in those logs. Each vertex in the social network graph represents a user (Email address) and each edge represents a social connection between the users (an Email sent from one user to another or vice versa).

The social network was constructed based on one week's log of Email traffic at Ben-Gurion University. Every Email sent from one university member to another was recorded. Every record in the log contains the exact date and time when the Email message was sent. Email addresses of senders and receivers were hashed in order to preserve the user's privacy. The log also contained the volume of every Email in bytes. The last field indicates whether the Email was successfully received by the addressee.

Malwares generally propagate via Email by sending themselves as an attachment to the Email. Generally, infected attachments weigh more than 2M. Therefore, records of Emails of a volume lower than 2M were removed. Emails that did not reach their destination were also removed.

The social network was constructed according to the remaining records. Every Email address that appears in the filtered log is mapped to a vertex. Two vertices are connected if there is at least one recorded Email from one to the other. The derived network is unweighted and undirected. Other properties of the network are described in Table 1.

### TABLE I

| Derived network statistical properties | |
|---|---|
| | Derived network |
| Number of vertices | 942 |
| Mean degree | 3.44 |
| Total number of edges | 1476 |

The hierarchy of the centrality of the vertices in the constructed graph representing the social network was found using the fast process for GBC computation described in R. Puzis et al., Fast Process for Successive Group Betweenness Centrality Computation, submitted for publication to Physical Review Letters E.

The fast process for GBC computation described by Puzis et al. was modified to construct a group of vertices with high GBC. The process requires preprocessing that can be performed in $O(n^3)$ time where n is the number of the vertices in the social network. The original process was aimed at rapid computation of GBC of various groups. Here the interest was in computing the GBC of a group of vertices C of size k. M was used during the process as a subset of C that includes vertices whose joint contribution was already accounted for. One of the most important features of this process is that the contribution of any vertex to the GBC of M is always known.

In this study an efficient greedy maximization of GBC was developed by starting the process with C equal to the set of all users and each time choosing the next vertex having maximal contribution. The following roughly describes the process used to find the possible groups of influential users:

1. The preprocessing step described in Puzis et al. was run thereby calculating the Betweenness Centrality of all vertices as a part of preprocessing;
2. Matrix M was then initialized with an empty set and the contributions of all vertices were initialized with their Betweenness Centrality;
3. A vertex with highest contribution was chosen and added to M. The contributions of all vertices calculated according to Puzis et al. were updated. Then, the vertex added to M is added also to an ordered list of vertices that contains the users arranged in the order in which they should be added to the group in order to maximize the centrality; and
4. Step 3 was repeated for all vertices in the network.

The third step of the above process takes $O(n^2)$ time to complete, and therefore the total execution time of stage two scales as the cube of the network size. This part of the example was implemented in C++ on a PIVCore-Duo 3GHz computer with 2GB memory. The analysis of the social network constructed in the first stage took a little less than three hours.

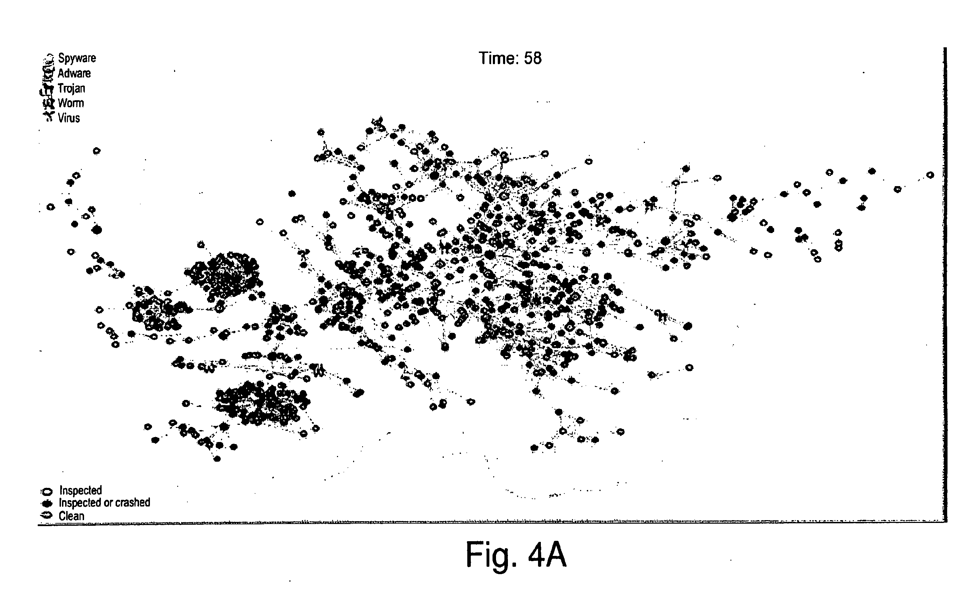

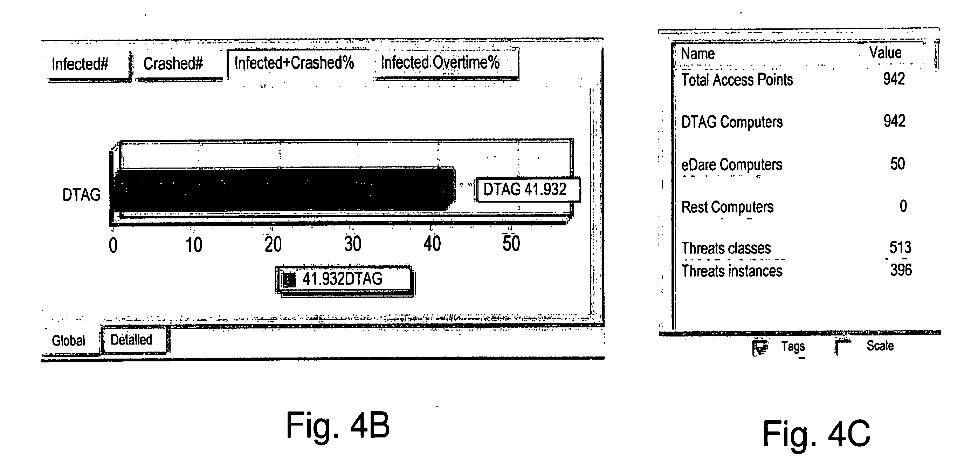

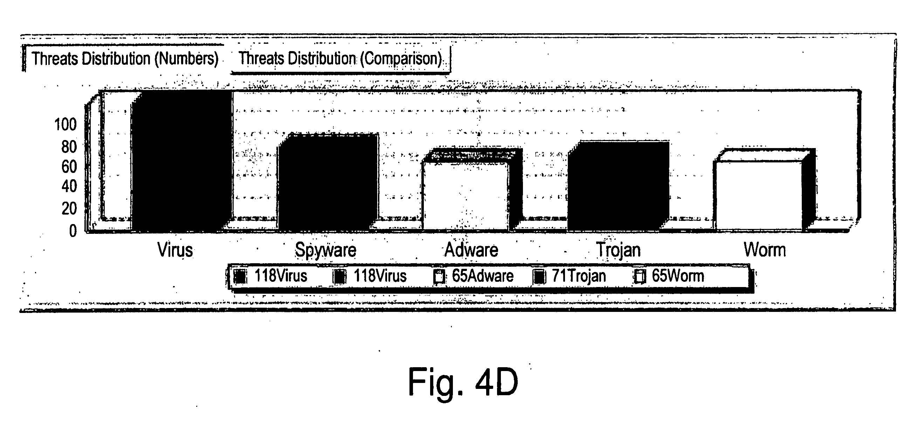

During the third step of the above process, both the index of the chosen vertex and the GBC of M top vertices were saved in the list described above, wherein the contents of this list are used in order to aid in the determination of the deployment of the detection systems throughout the social network. A deployment of size k should include the top k vertices in this ordered list. The size of the optimal deployment was determined in the third step in which every suggested deployment is evaluated using a network simulator developed especially for this implementation, described in some detail hereinbelow. A screen shot of the simulation can be seen in Figs. 4A to 4D.

In the third stage of this example, the propagation of malwares through the social network was analyzed in the presence of systems, referred to herein as DNIDS. The propagation of malwares through the social network was simulated using the SIRS epidemic model described hereinabove. Every DNIDS is capable of detecting new threats and removing known threats. Once a threat is detected, a unique signature is generated that identifies this threat class. Then, threat instances of this class that pass through deployed DNIDS are removed from the network traffic. The detection capability of DNIDS is modeled by defining various detection probabilities for different threat types (virus, worm etc.).

The deployment of DNIDS is set according to the ordered list generated using the greedy GBC maximization described hereinabove. To deploy DNIDS on a group of k users, we take the top k users from the ordered list generated by the greedy GBC maximization.

The output of the simulation tool is the average contamination level of the network and the time it takes to detect new threats. The following parameters are part of the settings of the simulation: Spontaneous propagation probability, accidental propagation probability, crash probability, the time range within which a computer can recover once it has crashed, and finally detection probability of DNIDS.

In order to validate that pinpointing the central group of users based on GBC and deploying DNIDS to these users reduce the contamination in the entire social network and reduce the detection time of new threats the results of the simulation according the description above were compared to random deployment, and to deployment based on single vertex Betweenness. In single vertex Betweenness k users with highest Betweenness Centrality were located (hereafter the term TopBC will be used for this deployment strategy). All of the results correspond to averages over 20 simulation runs for each deployment size.

At first it was checked whether deploying DNIDS based on GBC decreases the number of infected or crashed computers ($I + R = \overline{S}$) in the social network. The contamination parameters used in the simulations are as follows:

|  | Value |
| --- | --- |
| Initial worm threat classes | 10 |
| Threat activation probability | 1 |

(continued)

|  | Value |
| --- | --- |
| Appearance of spontaneous new threats in each computer every time unit | 0.0003 |
| The probability that a computer will send a threat in each time unit | 1 |
| The probability that a computer will crash in each time unit | 0.01 |
| The number of time units it takes a computer to recover from crashing | 5-50 |
| DNIDS detection probability of threat class | 0.5 |
| Initial number of threats in the network | 0 |

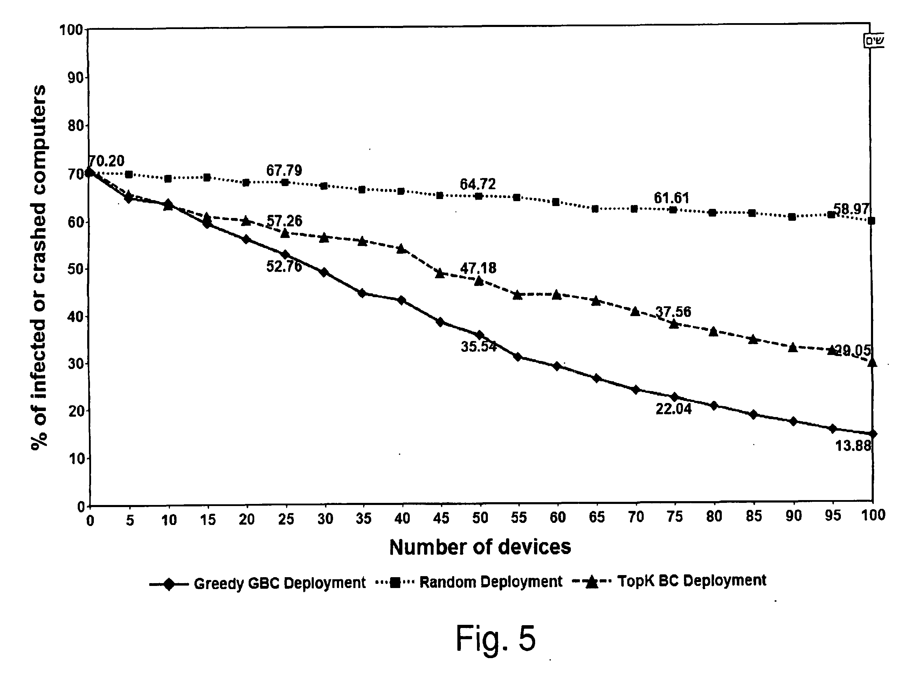

The results of this simulation are presented in Fig. 5 where the percent of either infected or crashed computers is presented for Greedy GBC, random, and TopBC deployment strategies.

As seen in Fig. 5 there is a difference in the "% of either infected or crashed computers" between deploying DNIDS based on the GBC process and deploying DNIDS randomly or using TopBC. It can also be seen that, as we increase the number of DNIDS deployed throughout the social network, the "% of either infected or crashed computers" decreases.

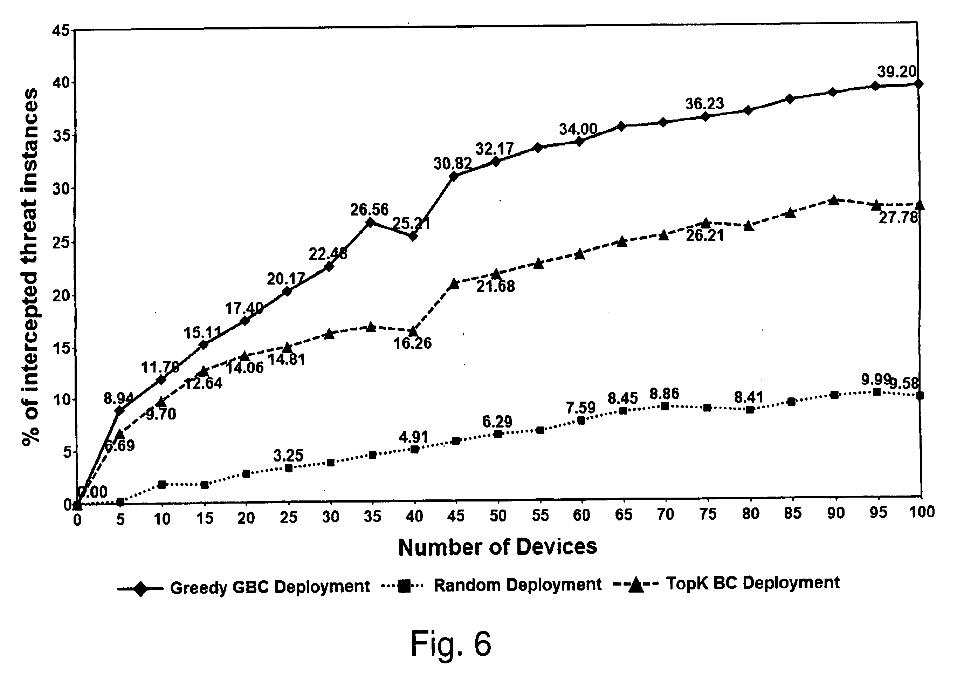

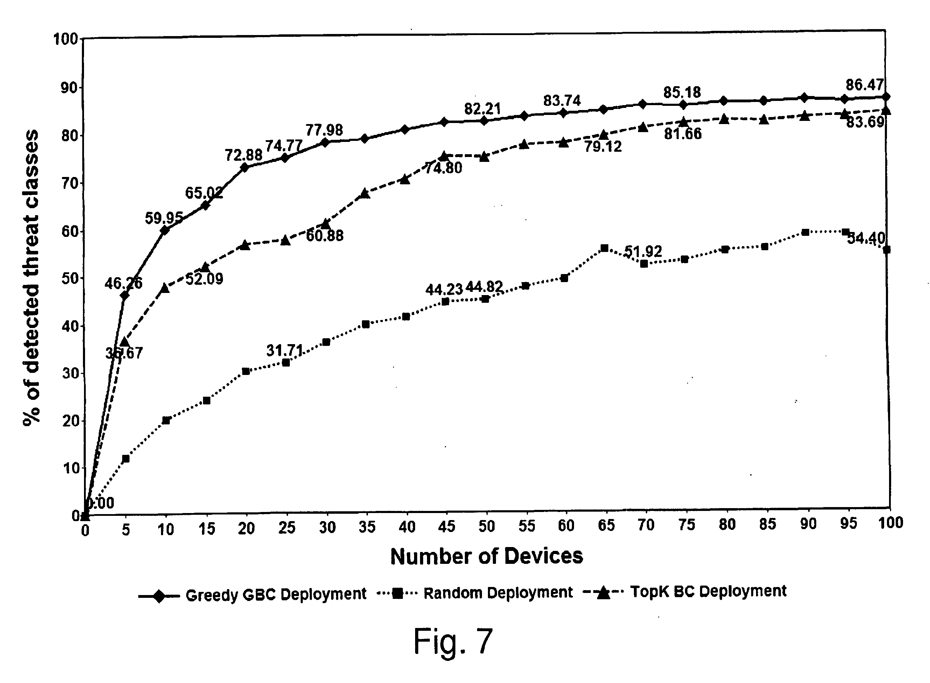

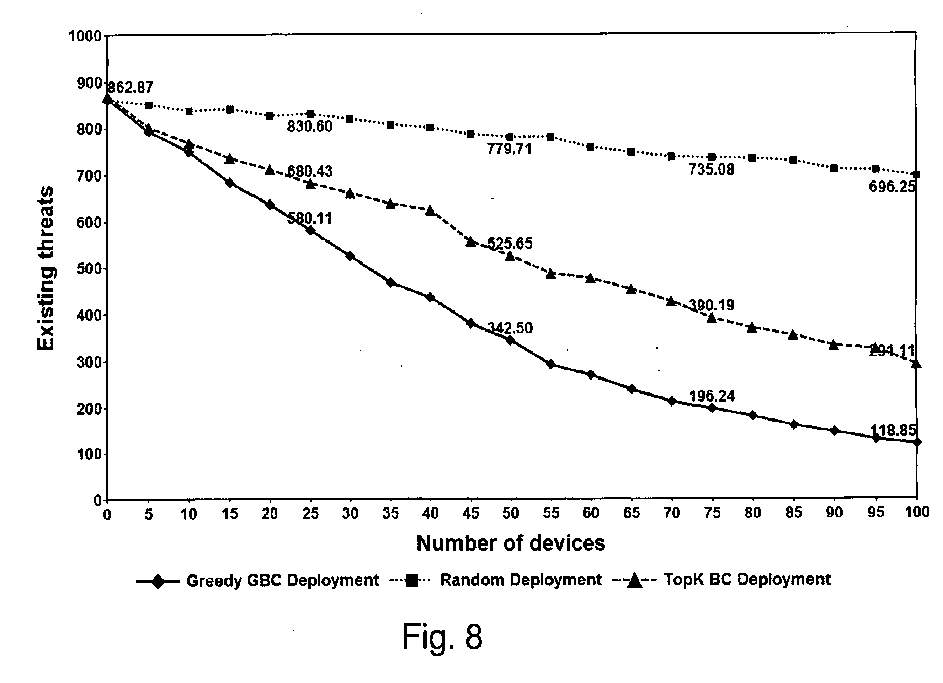

The results confirm that deployment of DNIDS on the most influential group of users decreases the "% of either infected or crashed computers" in the social network and that, as the number of deployed devices increases, this percentage decreases. An explanation of these results can be aided referring to Figures 6, 7, and 8. As the deployment size grows, the GBC of the group is larger, i.e., the social network communication is better covered. Therefore, the percent of threat classes detected by DNIDS (the detection rate) is higher as the deployment size increases (Fig. 7). Since DNIDS update its signatures of detected threats classes, as the deployment size is higher, the percent of threat instances existing in the network that were intercepted by DNIDS rises (Fig. 6) and the DNIDS is able to remove more threats from the network (Fig. 8). The outcome is therefore a significant increase in the percent of susceptible computers in the network.

A second aspect of this simulation refers to the time it takes the deployed DNIDS to detect a new threat class. The detection time parameters used in this simulation are as follows:

|  | Value |
| --- | --- |
| Initial Trojan horse threat classes | 1 |
| Threat activation probability | 1 |
| Appearance of spontaneous new threats in each computer every time unit | 0 |
| The probability that a computer will send a threat in each time unit | 1 |
| The probability that a computer will crash in each time unit | 0 |
| DNIDS detection probability of threat class | 0.001 |
| Initial number of threats in the network | 1.00E-07 |

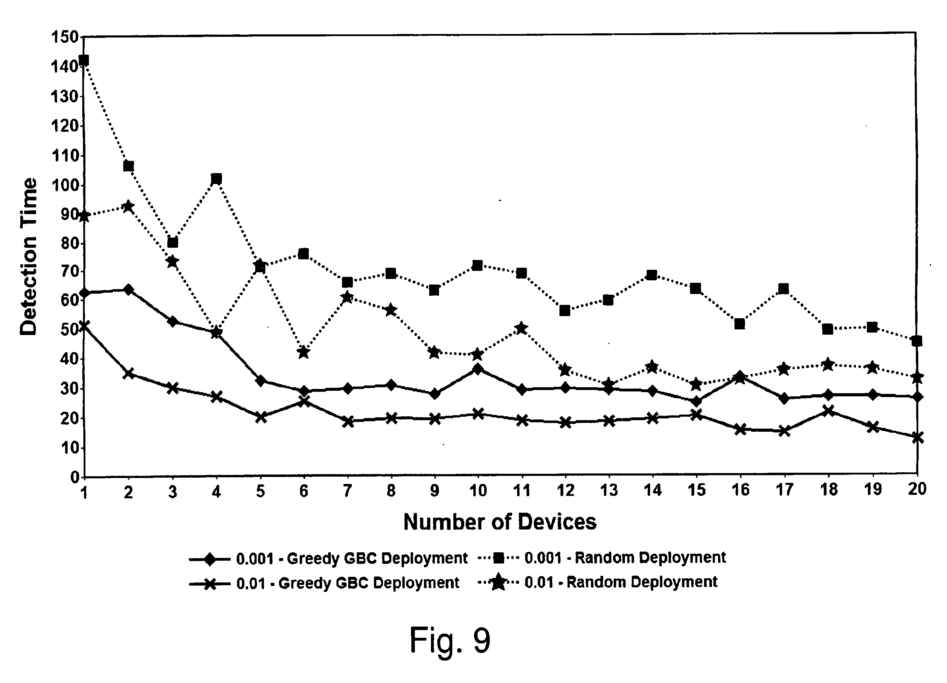

The detection probability represents the probability that DNIDS will detect a new threat class when intercepting one of its instances (this defines the detection performance of DNIDS). The results achieved when deploying DNIDS using Greedy GBC process were compared to the results of random deployment, for detection probabilities 0.001 and 0.01. The results are presented in Fig. 9.

It can be seen in Fig. 9 that deploying DNIDS on a central group of users significantly reduces the time it takes to detect a new threat class. In addition, the time to detect a new threat class decreases as the detection probability increases. Furthermore, as the deployment size increase the detection time decreases.

It is easy to see in Fig. 9 that five devices are enough in order to detect new threat classes in this example simulation. However, in order to clean the traffic in the social network more devices should be deployed. Generally, a set target of "% of infected computers" should dictate the number of deployed devices.

Although embodiments of the present invention have been described by way of illustration, it will be understood that the invention may be carried out with many variations, modifications, and adaptations, without departing from the scope of the claims.

**Claims**

1. A method for deploying malware detection systems over a social network of computers, comprising:

   a. constructing said social network according to the communication patterns between the different users on the computer network;
   b. identifying the hierarchy of the significance of said users, according to their influence on the communications within said social network;
   c. analyzing the propagation of malwares through said social network; and
   d. deploying said detection systems throughout said social network according to the results of said analysis.

2. The method according to claim 1 wherein the social network is constructed according to at least one of the following types of communications:

   a. email transactions;
   b. instant messaging; and
   c. chat rooms.

3. The method according to claim 1 wherein the social network is represented by a graph that is:

   a. Un-weighted and undirected; or
   b. weighted and undirected; or
   c. un-weighted and directed; or
   d. weighted and directed.

4. The method according to claim 3, wherein:

   a. the direction refers to the direction of the transmissions between the users in the social network; and
   b. the weight refers to;

      i) the volume of said transmissions;
      ii) the number of said transmissions; or
      iii) both of the above.

5. The method according to claim 1 wherein the hierarchy of the significance of the users in the social network is calculated according to:

   a. degree centrality;
   b. closeness centrality;
   c. betweenness centrality; and
   d. group betweenness centrality.

6. The method according to claim 1 wherein the hierarchy of the significance of the users in the social network is calculated according to group betweenness centrality.

7. The method according to claims 5 and 6 wherein the group betweenness centrality is calculated by:

   a. conducting a preprocessing step, wherein four matrices, the first comprising the distances between every two vertices in said network, the second comprising elements of $\sigma_{s,t}$ for every pair of [s,t] vertices in said network, the third comprising elements of $\delta_{s,\bullet}(v) = \sum_{t \in V} \delta_{s,t}(v) \cdot CW(s,t)$ for every pair of [s,t] vertices in said network and the fourth comprising the path betweenness between every two vertices in said network, are constructed;
   b. choosing the relevant portions of said four matrices that correspond to the vertices in each group, thereby creating reduced matrices, wherein said reduced matrices for groups comprising k vertices are of k $\times$ k size;
   c. performing calculations with regard to one vertex in said group using said reduced matrices, for obtaining the contributions of all other vertices to the betweenness centrality of said group;
   d. updating said reduced matrices according to the result of step (c);

e. repeating calculations and updating of said reduced matrices referred to in steps (c) and (d) for each additional vertex, wherein paths that pass through any of the previously computed vertices are not considered; and,

f. once all vertices have been added into the calculations, summing the results of all consecutive calculations, wherein the sum represents the betweenness centrality of said group.

**8.** The method according to claim 7 wherein the updating of the σ matrix for the number of paths passing between vertices x and y is performed according the equation $\sigma_{x,y}^{M \cup \{v\}} = \sigma_{x,y}^{M} \cdot (1 - \delta_{x,y}^{M}(v))$, wherein $\sigma_{x,y}^{M \cup \{v\}}$ is the new, updated, matrix after vertex v was added to the group, and wherein $\sigma_{x,y}^{M}$ is the old matrix before the update and $\delta_{x,y}^{M}(v)$ is calculated according to the equation

$$\delta_{x,y}^{M}(v) = \begin{cases} \sigma_{x,v}^{M} \cdot \sigma_{v,y}^{M} & dist[x,y] = dist[x,v] + dist[v,y] \\ 0 & otherwise \end{cases}.$$

**9.** The method according to claim 7 wherein the updating of the path betweenness matrix P3, referring to vertices x and y, takes the identity of vertex v into account such that:

a) if vertex v=y=x then $PB_{x,y}^{M \cup v} = PB_{x,y}^{M} - PB_{x,y}^{M} \cdot \delta_{x,y}^{M}(v)$, otherwise,

b) if x≠v=y then $PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x)$, otherwise,

c) if y≠v=x then $PB_{x,y}^{M \cup v} = PB_{x,y}^{M} - PB_{x,y}^{M} \cdot \delta_{x,y}^{M}(v) - PB_{x,v}^{M} \cdot \delta_{x,v}^{M}(y)$, and otherwise,

d) if x≠v≠y then $PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x) - PB_{x,v}^{M} \cdot \delta_{x,v}^{M}(y)$,

wherein the matrices denoted by $M \cup v$ are the new updated matrices, while the old matrices are denoted by M.

**10.** The method according to claim 1 wherein the analysis of the propagation of malwares through the social network is performed using an epidemic propagation model.

**11.** The method according to claim 8 wherein the epidemic propagation model is SIRS.

**12.** The method according to claim 1 wherein the analysis of the propagation of malwares through the social network is performed assuming that there are detection systems distributed throughout said social network according to the centrality of the various users on said social network.

**13.** The method according to claim 1 wherein the detection system can both detect and contain malwares propagating over the social network.

**Patentansprüche**

**1.** Verfahren zum Verteilen von Malware-Erfassungssystemen über ein soziales Netz aus Computern, Folgendes umfassend:

a. Aufbauen des sozialen Netzes nach den Kommunikationsmustern zwischen den verschiedenen Benutzern des Computernetzes;

b. Identifizieren der Hierarchie der Signifikanz der Benutzer nach ihrem Einfluss auf die Kommunikationen in dem sozialen Netz;

c. Analysieren der Ausbreitung von Malware durch das soziale Netz; und

d. Einsetzen der Erfassungssysteme über das gesamte soziale Netz nach dem Ergebnis der Analyse.

**2.** Verfahren nach Anspruch 1, wobei das soziale Netz nach wenigstens einem der folgenden Kommunikationstypen aufgebaut ist:

a. E-Mail-Transaktionen;

b. Sofortnachrichten; und

c. Chaträume.

3. Verfahren nach Anspruch 1, wobei das soziale Netz durch einen Graphen repräsentiert ist, der:

a. ungewichtet und ungerichtet; oder
b. gewichtet und ungerichtet; oder
c. ungewichtet und gerichtet; oder
d. gewichtet und gerichtet ist.

4. Verfahren nach Anspruch 3, wobei:

a. die Richtung sich auf die Richtung von Übermittlungen zwischen den Benutzern in dem sozialen Netz bezieht; und
b. die Gewichtung sich auf Folgendes bezieht;

i) das Volumen der Übermittlungen;
ii) die Anzahl der Übermittlungen; oder
iii) beides oben Genanntes.

5. Verfahren nach Anspruch 1, wobei die Hierarchie der Signifikanz der Benutzer in dem sozialen Netz berechnet wird gemäß:

a. Grad-Zentralität;
b. Nähe-Zentralität;
c. Zwischen-Zentralität; und
d. Gruppen-Zwischen-Zentralität.

6. Verfahren nach Anspruch 1, wobei die Hierarchie der Signifikanz der Benutzer in dem sozialen Netz nach Gruppen-Zwischen-Zentralität berechnet wird.

7. Verfahren nach Anspruch 5 und 6, wobei die Gruppen-Zwischen-Zentralität berechnet wird durch:

a. Durchführen eines Vorverarbeitungsschritts, in dem vier Matrizen generiert werden, von denen die erste die Abstände zwischen jedem Paar aus Knoten in dem Netz umfasst, die zweite Elemente aus $\sigma_{s,t}$ für jedes Paar aus [s,t]-Knoten in dem Netz umfasst, die dritte Elemente aus $\delta_{s,\bullet}(v) = \sum_{t \in V} \delta_{s,t}(v) \cdot CW(s,t)$ für jedes Paar aus [s,t]-Knoten in dem Netz umfasst, und die vierte die Pfad-Zwischen-Zentralität zwischen jedem Paar aus Knoten in dem Netz umfasst;
b. Auswählen der relevanten Teile der vier Matrizen, die den Knoten in jeder Gruppe entsprechen, und dadurch Generieren verringerter Matrizen, wobei die verringerten Matrizen für Gruppen mit k Knoten k × k groß sind;
c. Ausführen von Berechnungen mit Bezug auf einen Knoten in der Gruppe unter Einsatz der verringerten Matrizen, zum Erhalten der Beiträge aller anderen Knoten zur Zwischen-Zentralität der Gruppe;
d. Aktualisieren der verringerten Matrizen nach dem Ergebnis aus Schritt (c);
e. Wiederholen der Berechnungen und des Aktualisierens der verringerten Matrizen nach Schritt (c) und (d) für jeden weiteren Knoten, wobei Pfade durch die bereits berechneten Knoten nicht betrachtet werden; und,
f. nach dem Hinzufügen aller Knoten in die Berechnungen, Aufsummieren der Ergebnisse aller aufeinanderfolgenden Berechnungen, wobei die Summe die Zwischen-Zentralität der Gruppe darstellt.

8. Verfahren nach Anspruch 7, wobei das Aktualisieren der $\sigma$-Matrix für die Anzahl der Pfade zwischen den Knoten x und y nach der Gleichung $\sigma_{x,y}^{M \cup \{v\}} = \sigma_{x,y}^{M} \cdot (1 - \delta_{x,y}^{M}(v))$ durchgeführt wird, wobei $\sigma_{x,y}^{M \cup \{v\}}$ die neue aktualisierte Matrix ist, nachdem Knoten v zur Gruppe hinzugefügt worden ist, und wobei $\sigma_{x,y}^{M}$ die alte Matrix vor der Aktualisierung ist und $\delta_{x,y}^{M}(v)$ nach der Gleichung

$$\delta_{x,y}^{M}(v) = \begin{cases} \sigma_{x,v}^{M} \cdot \sigma_{v,y}^{M} & dist[x,y] = dist[x,v] + dist[v,y] \\ 0 & sonstiges \end{cases}$$ berechnet wird.

9. Verfahren nach Anspruch 7, wobei das Aktualisieren der Pfad-Zwischen-Zentralität-Matrix PB, bezogen auf die Knoten x und y, die Identität des Knoten v einbezieht, sodass:

a) falls Knoten v=y=x, dann $PB_{x,y}^{M\cup v} = PB_{x,y}^{M} - PB_{x,y}^{M} \cdot \delta_{x,y}^{M}(v)$ ansonsten,

b) falls x≠v=y, dann $PB_{x,y}^{M\cup v} = PB_{x,y}^{M} - PB_{x,y}^{M} \cdot \delta_{x,y}^{M}(v) - PB_{v,y}^{M} \cdot \delta_{v,y}^{M}(x)$ ansonsten,

c) falls y≠v=x, dann $PB_{x,y}^{M\cup v} = PB_{x,y}^{M} - PB_{x,y}^{M} \cdot \delta_{x,y}^{M}(v) - PB_{x,v}^{M} \cdot \delta_{x,v}^{M}(y)$ und ansonsten,

d) falls x≠t≠y, dann $PB_{x,y}^{M\cup v} = PB_{x,y}^{M} - PB_{x,y}^{M} \cdot \delta_{x,y}^{M}(v) - PB_{v,y}^{M} \cdot \delta_{v,y}^{M}(x) - PB_{x,v}^{M} \cdot \delta_{x,v}^{M}(y)$,

wobei die durch $M \cup v$ bezeichneten Matrizen die neuen aktualisierten Matrizen sind, während die alten Matrizen durch M bezeichnet werden.

10. Verfahren nach Anspruch 1, wobei die Analyse der Ausbreitung von Malware über das soziale Netz unter Einsatz eines epidemischen Ausbreitungsmodells durchgeführt wird.

11. Verfahren nach Anspruch 8, wobei das epidemische Ausbreitungsmodell SIRS ist.

12. Verfahren nach Anspruch 1, wobei die Analyse der Ausbreitung von Malware über das soziale Netz unter der Annahme durchgeführt wird, dass Erfassungssysteme im sozialen Netz nach der Zentralität der verschiedenen Benutzer im sozialen Netz verteilt sind.

13. Verfahren nach Anspruch 1, wobei das Erfassungssystem Malware, die sich im sozialen Netz ausbreitet, sowohl erfassen als auch eindämmen kann.

**Revendications**

1. Procédé pour le déploiement de systèmes de détection de logiciels malveillants sur un réseau social d'ordinateurs, comportant les étapes consistant à :

a. construire ledit réseau social en fonction des modèles de communication entre les différents utilisateurs sur le réseau informatique,
b. identifier la hiérarchie de l'importance desdits utilisateurs, en fonction de leur influence sur les communications au sein dudit réseau social,
c. analyser la propagation des logiciels malveillants dans ledit réseau social, et
d. déployer lesdits systèmes de détection dans tout ledit réseau social en fonction des résultats de ladite analyse.

2. Procédé selon la revendication 1, dans lequel le réseau social est construit en fonction d'au moins un des types de communication suivants :

a. transactions par courrier électronique,
b. messagerie instantanée, et
c. sites de dialogue en ligne.

3. Procédé selon la revendication 1, dans lequel le réseau social est représenté par un graphe qui est :

a. non pondéré et non dirigé, ou
b. pondéré et non dirigé, ou
c. non pondéré et dirigé, ou
d. pondéré et dirigé.

**4.** Procédé selon la revendication 3, dans lequel :

   a. la direction se rapporte à la direction des transmissions entre les utilisateurs dans le réseau social, et
   b. le poids se rapporte :

   i) au volume desdites transmissions,
   ii) au nombre desdites transmissions, ou
   iii) aux deux éléments qui précèdent.

**5.** Procédé selon la revendication 1, dans lequel la hiérarchie de l'importance des utilisateurs dans le réseau social est calculée en fonction de :

   a. la centralité du degré,
   b. la centralité de l'étroitesse,
   c. la centralité de la relation intermédiaire, et
   d. la centralité de l'étroitesse du groupe.

**6.** Procédé selon la revendication 1, dans lequel la hiérarchie de l'importance des utilisateurs dans le réseau social est calculée en fonction de la centralité de l'étroitesse du groupe.

**7.** Procédé selon les revendications 5 et 6, dans lequel la centralité de l'étroitesse du groupe est calculée :

   a. en conduisant une étape de prétraitement, dans laquelle sont construites quatre matrices, la première comportant les distances entre tous les deux sommets dans ledit réseau, la deuxième comportant des éléments de $\sigma_{s,t}$, pour chaque paire de sommets [s,t] dans ledit réseau, la troisième comportant des éléments de

   $$\delta_{s,\bullet}(v) = \sum_{t \in V} \delta_{s,t}(v) \cdot CW(s,t)$$ pour chaque paire de sommets [s,t] dans ledit réseau et la quatrième comportant la relation intermédiaire de cheminement entre tous les deux sommets dans ledit réseau,

   b. en choisissant les portions pertinentes desdites quatre matrices qui correspondent aux sommets dans chaque groupe, en créant ainsi des matrices réduites, dans lequel lesdites matrices réduites pour des groupes comportant k sommets sont de taille k × k,
   c. en effectuant des calculs en ce qui concerne un sommet dans ledit groupe en utilisant lesdites matrices réduites, pour obtenir les contributions de tous les autres sommets à la centralité de l'étroitesse dudit groupe,
   d. en mettant à jour lesdites matrices réduites en fonction du résultat de l'étape (c),
   e. en répétant les calculs et en mettant à jour lesdites matrices réduites auxquelles il est fait référence aux étapes (c) et (d) pour chaque sommet supplémentaire, dans lequel des trajets qui passent par l'un quelconque des sommets précédemment calculés ne sont pas pris en compte, et,
   f. une fois que tous les sommets ont été ajoutés dans les calculs, en totalisant les résultats de tous les calculs consécutifs, la somme représentant la centralité de l'étroitesse dudit groupe.

**8.** Procédé selon la revendication 7, dans lequel la mise à jour de la matrice σ pour le nombre de trajets passant entre les sommets x et y est réalisée d'après l'équation $\sigma_{x,y}^{M \cup (v)} = \sigma_{x,y}^{M} \cdot (1 - \delta_{x,y}^{M}(v))$, dans laquelle $\sigma_{x,y}^{M \cup (v)}$ est la nouvelle matrice mise à jour après que le sommet v ait été ajouté au groupe, et dans laquelle $\sigma_{x,y}^{M}$ est l'ancienne matrice avant la mise à jour et $\delta_{x,y}^{M}(v)$ est calculée d'après l'équation

$$\delta_{x,y}^{M}(v) = \begin{cases} \sigma_{x,v}^{M} \cdot \sigma_{v,y}^{M} & dist[x,y] = dist[x,v] + dist[v,y] \\ 0 & otherwise \end{cases}.$$

**9.** Procédé selon la revendication 7, dans lequel la mise à jour de la matrice de relation intermédiaire de cheminement PB se rapportant aux sommets x et y, prend en compte l'identité du sommet v de telle sorte que :

   a) si le sommet v = y = x alors $PB_{x,y}^{M \cup v} = PB_{x,y}^{M} - PB_{x,y}^{M} \cdot \delta_{x,y}^{M}(v)$, sinon

   b) si x ≠ v = y alors $PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x)$ sinon,

   c) si y ≠ v = x alors $PB_{x,y}^{M \cup v} = PB_{x,y}^{M} - PB_{x,y}^{M} \cdot \delta_{x,y}^{M}(v) - PB_{x,v}^{M} \cdot \delta_{x,v}^{M}(y)$, et sinon,

d) si x ≠ v ≠ y alors $PB_{x,y}^{M \cup v} = PB_{x,y}^{M} - PB_{x,y}^{M} \cdot \delta_{x,y}^{M}(v) - PB_{v,y}^{M} \cdot \delta_{v,y}^{M}(x) - PB_{x,v}^{M} \cdot \delta_{x,v}^{M}(y)$,

dans lequel les matrices représentées par $M \cup v$ sont les nouvelles matrices mises à jour, alors que les anciennes matrices sont représentées par M.

10. Procédé selon la revendication 1, dans lequel l'analyse de la propagation des logiciels malveillants dans le réseau social est effectuée en utilisant un modèle de propagation épidémique.

11. Procédé selon la revendication 8, dans lequel le modèle de propagation épidémique est SIRS.

12. Procédé selon la revendication 1, dans lequel l'analyse de la propagation des logiciels malveillants sur le réseau social est effectuée en supposant qu'il y a des systèmes de détection répartis dans tout ledit réseau social en fonction de la centralité des différents utilisateurs sur ledit réseau social.

13. Procédé selon la revendication 1, dans lequel le système de détection peut à la fois détecter et contenir des logiciels malveillants se propageant sur le réseau social.

Fig. 1

$$\begin{array}{cc} \text{(x)} & + \ 3 \\ \text{(y)} & + \ 1 \\ \text{(z)} & + \ 1 \\ \hline & = \ 5 \end{array}$$

Fig. 2

EP 1 990 973 B1

# Fig. 3

Fig. 4A

Fig. 4C

Fig. 4B

Fig. 4D

EP 1 990 973 B1

Fig. 5

Fig. 6

Fig. 7

Fig. 8

EP 1 990 973 B1

EP 1 990 973 B1

Detection Time

150
140
130
120
110
100
90
80
70
60
50
40
30
20
10
0

1  2  3  4  5  6  7  8  9  10  11  12  13  14  15  16  17  18  19  20

**Number of Devices**

◆ 0.001 - Greedy GBC Deployment    ▪ 0.001 - Random Deployment
✕ 0.01 - Greedy GBC Deployment    ★ 0.01 - Random Deployment

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. ZHANG ; C. LI ; W. ZHENG.** Intrusion prevention system design. *Proceedings - The Fourth International Conference on Computer and Information Technology,* 2004, 386-390
- **Y. TANG ; S. CHEN.** Defending Against Internet Worms. A signature based approach. *IEEE INFOCOM,* 2005
- **A. GUPTA ; R. SEKAR.** An Approach for Detecting Self-Propagating Email Using Anomaly Detection. *Proceedings of the International Symposium on Recent Advances in Intrusion Detection,* September 2003
- **WEAVER et al.** A taxonomy of computer worms. *The First ACM Workshop on Rapid Malcode (WORM),* 2003
- **V. YEGNESWARAN ; P. BARFORD ; S. JHA.** Global Intrusion Detection in the DOMINO Overlay System. *Proceedings of NDSS,* 2004
- **R. PASTOR-SATORRAS ; A. VESPIGNANI.** *Epidemics and immunization in scale-free networks,* 2002, http://arxiv.org/abs/cond-mat/0205260
- **G. SABIDUSSI.** The centrality Index of a Graph. *Psychometrika,* 1966, vol. 31, 581-603
- **L. C. FREEMAN.** *Sociometry,* 1977, vol. 40, 35-41
- **J. M. ANTHONISSE.** The Rush in a Directed Graph, Technical Report BN 9/71. *Stichting Mathematisch Centrum,* 1971
- **P. HAGE ; F. HARARY.** *Social Networks,* 1995, vol. 17, 57-63
- **M. G. EVERETT ; S. P. BORGATTI.** The centrality of Groups and Classes. *Mathematical Sociology,* 1999, vol. 23 (3), 181-201
- **ULRIK BRANDES.** *Mathematical Sociology,* 2001, vol. 25 (2), 163-177
- **R. HUERTA ; L.S. TSIMRING.** Contact tracing and epidemics control in social networks. *Physical Review E,* 2002, vol. 66, 056115
- **M. E. J. NEWMAN.** The structure and function of complex networks. *SIAM Review,* 2003, vol. 45 (2), 167-256
- **R. PUZIS et al.** *Fast Process for Successive Group Betweenness Centrality Computation, submitted for publication to Physical Review Letters E*